(19) Europäisches Patentamt

European Patent Office

Office européen des brevets

(11) **EP 0 918 113 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(51) Int Cl.⁷: **E03F 9/00**, E03F 5/10, F16K 3/02

(21) Anmeldenummer: **97120508.3**

(22) Anmeldetag: **21.11.1997**

(54) **Schiebersystem zur kontinuierlichen Aussteuerung**

Sliding system for continuous control

Système coulissant pour la commande en continu

(84) Benannte Vertragsstaaten:
**DE FR GB IT**

(43) Veröffentlichungstag der Anmeldung:
**26.05.1999 Patentblatt 1999/21**

(73) Patentinhaber: **Weikopf, Manfred**
**D-47804 Krefeld (DE)**

(72) Erfinder: **Weikopf, Manfred**
**D-47804 Krefeld (DE)**

(56) Entgegenhaltungen:
CA-A- 1 225 384          DE-A- 2 556 909
DE-A- 3 616 418          US-A- 1 634 697
US-A- 2 835 469

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Schiebersystem zur kontinuierlichen Aussteuerung und Reinigung von Kanalisationsanlagen durch Erzeugung von Schwallwellen sowie konstruktionsbedingten weiteren Nutzung als Steuer- und Verschlußorgan für sonstige flüssige und gasförmige Medien mit insgesamt aufzuzeigenden Varianten (**A; B; C; D**).

Grundsätzlich werden Schiebersysteme als Steuer- und Regelorgane in Kanal-, Wasser- und Gasnetzen verwendet. In Kanalnetzen besteht die weitestgehende Aufgabe darin, die verschiedensten Abflußbegrenzungskriterien zur Kläranlage unter Einhaltung von zulässigen Maximalwerten der Ober- bzw. Unterwasserstände einzuhalten. Bei Gas- und Wassernetzen haben Schiebersysteme meist die Aufgabe als Absperreinrichtung zu füngieren, wobei beispielhaft DE-U-29514530 bzw. DE-A-4425980 herangezogen werden kann. Darüber hinaus wird die weitergehende Reinigung von Kanalnetzen mittels dieser Organe zumindest bei kleineren Nennweiten immer wieder versucht, langfristig aber müssen diese Versuche scheitern, da die üblichen Nennweiten gesteuerter Drosseln zwischen DN 200 mm und maximal DN 800 mm liegen und die notwendige Hubgeschwindigkeit von 3,00 m bis 5,00 m/min als wesentlichstes Kriterium zur Erzeugung optimierter Schwallwellen für Keilflachschieber und sonstiger Schiebersysteme nicht erreicht werden. Dies bedeutet, dass auch beim Zufahren des Querschnittes, insbesondere bei Versandung der vertikal angeordneten U-förmigen Nuten im Sohlenbereich, die Endstellung nicht mit der vorgegebenen Absenkgeschwindigkeit angesteuert werden kann, weil eine vorzeitige Blockade vor Erreichen des Nullpunktes nicht ausgeschlossen ist. Weiterhin ist ein Schieberventil gemäß D1: (DE-A-2556909) bekannt, daß insbesondere bei hohen Temperaturen und Drücken zum Einsatz kommen kann und mit austauschbaren Dichtungen versehen, unter 90° zwangsgeführt, ausgesteuert werden soll.

Ein neuartiger Ansatz zur kontinuierlichen Kanalreinigung größerer Kanalquerschnitte in Mischsystemen wird durch den Einbau von Spülwehren gemäß DE-A-3616418 erreicht, bei der mittels schneller, hydraulisch bewirkter vertikaler Absenkung einer planparallelen Wehrplatte eine Schwallwelle erzeugt wird, die je nach Vorstauhöhe und zugehörigem Schwallzyklus u.a. ein sedimentationsfreies Kanalnetz über mehrere Kilometer bewirkt, wobei der derzeitige "inoffizielle Weltrekord" (Stand Juli 1997) einer Kaskadenanlage in D-Mengen / Donau ca. 2.400 m bei NW 1600 bis NW 2400 beträgt.

Spülwehre mit Kaskadenfunktion in Verbindung mit neueren Fertigungstechniken von Wehrplatten gemäß EP 0589079 Bl sind bedingt durch die integrierten Widerlager- bzw. Dichtelemente, technisch wie auch kostengünstig nur für Nennweiten >1.200 mm und bei entsprechendem Stauvolumen > 500 m$^3$ sinnvoll einsetzbar. Da bekanntermaßen auch flache Abwassernetze mit kleineren Nennweiten sedimentationsbehaftet sind, liegt es nahe, daß zur Realisierung einer automatisierten Kanalnetzreinigung geeignete, kostengünstig zu produzierende, aussteuerbare Schwallelemente für die Nennweiten NW 200 bis NW 1.100 benötigt werden.

**Die vorliegende Erfindung** betrifft ein Schiebersystem, mit den Merkmalen der Anspruchs 1, bei dem ein Schieber-Element mit seiner ebenflächigen Unterseite unter einem Winkel ($0° \leq \alpha \leq 90°$) auf einem ebenfalls ebenflächigen im Regelfall planparallelen Verschleiß- und Dichtungs-Element aufliegt und zwangsgeführt mittels eines innerhalb oder auch außerhalb fixierten Verschub-Elementes in eine auszusteuernde Verschlußstellung verschoben werden kann. Da auch die Unterseite des Verschleiß- und Dichtungs-Elementes jeweils auf der ebenflächigen Auslaß- bzw. Einlaßprofil des entsprechenden Grund-Elementes der Varianten (A-D) aufliegt, ist sichergestellt, daß das Schiebersytem generell als Steuer- und Verschlußorgan für alle flüssige und gasförmige Medien zu verwenden ist.

Da das Schiebersystem wie zuvor definiert, fünktionsbedingt aus vier Einzelelementen wie folgt:

   1. Grund-Element
   2. Verschleiß-und Dichtungs-Element
   3. Schieber-Element
   4. Verschub-Element

besteht, werden nunmehr im Einzelnen die entsprechenden Varianten (A-D) und danach die Funktions- und Konstruktionsformen der Einzelelemente 1. bis 4. beschrieben. Grundsätzlich unterscheiden sich die Varianten (A-D) durch ihre Funktion zur Aussteuerung der im Oberbegriff des Patentanspruches 1 definierten, auszusteuernden Medien und weiterhin durch die Anströmrichtung sowie die unterschiedlich nutzbaren Druckhöhen des jeweiligen Mediums.

Demzufolge ist die aussteuerbare Druckhöhe bei der Variante (A; C) geringer als Variante (B;D) weil bei Variante (A;C) die **R**esultierende-**G**ewichts-**K**omponente **RGK** des Schieber-Elementes maßgebend ist. Bei Variante (B;D) sind wesentlich höhere Drücke der jeweils genutzten Medien denkbar, weil zusätzlich zur **R**esultierenden-**G**ewichts-**K**omponente **RGK** des Schieber-Elementes der anstehende **M**edien-**D**ruck **MD** auf die Schieberplatte die Dichtwirkung des Schieber-Elementes verstärkt. Weiterhin kann man technisch gesehen die Varianten (A; B) als offene Systeme bezeichnen, mit sinnvollen Anwendungen bei Freispiegelanlagen der Kanalisationstechnik, und die Varianten (C; D) als geschlossene Systeme, wobei die Variante (C) mehr einem Niederdrucksystem und die Variante (D) einem Hochdrucksystem zuzuordnen ist.

Die ebenfalls angesprochene Erzeugung von Schwallwellen zur Reinigung von Kanalisationsanlagen ist vornehmlich den Varianten (A;B), unabhängig vom vorhandenen Sohlsprung zuzuordnen. Hierbei wird das Schieber-Element unter einem Winkel ($\alpha$) unter Mitwirkung des Verschub-Elementes schnell nach oben gezogen, so daß eine unterschlächtige Weiterleitung des Abwassers in Form sedimentierter Frachten in Richtung des Ablaufkanales erfolgt. Eine weitere sinnvolle Lösung zur Variante (A) ergibt sich dann, wenn durch Anordnung eines entsprechend bemessenen Sohlsprunges eine Absenkung des Schieber-Elementes und somit zusätzlich eine oberschlägige Weiterleitung von Schwimmstoffen erfolgen kann. Die wechselseitige Aussteuerung von ober- bzw. unterschlächtiger Weiterleitung von Abwasser mittels eines Schieber-Elementes in Ergänzung zu Variante (A) eröffnet völlig neue Optimierungsmöglichkeiten zur Schmutzfrachtableitung im Übergangsbereich von großformatigen Staukanälen auf gedrosselte Querschnitte Richtung Kläranlage.

Das Grund-Element bei Variante (A; B) besteht ansonsten aus einem Rohrformstück in Edelstahl, Kunststoff oder sonst im Kanalbau üblichen Materialien, daß auf der einen Seite mit einem entsprechend ausgeformten Rohrverbindungsstück und auf der entgegengesetzten Seite mit einem unter einem Winkel ($\alpha$) geneigten Auslaßprofil bei Variante (A) bzw. einem Einlaßprofil bei Variante (B) begrenzt ist, wobei die Umrandungsfläche hierzu ebenflächig anschließt, damit darauf das Verschleiß- und Dichtungs-Element, daß im Regelfall aus abriebfestem Kunststoff besteht, mittels Ankerschrauben arretiert werden kann. Als Umhüllungsmaterial des Grund-Elementes einschließlich der angeformten Sohle sowie der umlaufenden Wände ist vorzugsweise, insbesondere bei Einsatz in Kanalisationsanlagen eine entsprechende Stahlbetonbauweise geeignet. Zur Begrenzung der zulaufseitigen Druckhöhe bei Variante (A) ist es sinnvoll, daß das zulaufende Kanalsystem durch die Fließrichtung markiert, mit einem entsprechend angeordneten Überlauf versehen ist, damit nicht durch eine druckbedingte Leckage feste Partikel des Abwassers in den ansonsten spaltfreien Dichtungsraum zwischen dem Verschleiß- und Dichtungs-Element und dem Schieber-Element gelangen kann.

Bei der Variante B ist dieser Überlauf nicht nötig, da die Dichtwirkung durch Mediendruckerhöhung nicht vermindert, sonder eher verbessert werden kann. Das Grund-Element bei den Varianten (C; D) sollte vornehmlich wegen der möglichen Medien-Drücke aus Edelstahl bzw. hochwertigem Kunststoff bestehen.

Die außenseitigen Rohrverbindungsstücke sind üblicherweise mit entsprechenden Flanschen auszustatten. Zur möglichen Demontage des Verschleiß- und Dichtungs-Elementes bzw. des Schieber-Elementes ist es notwendig, daß das Grund-Element mit angeformten Rechteckflanschen und einem entsprechend angeformten Deckel druckdicht über Verschraubungen und zwischengelegter Dichtung druckdicht verbunden werden kann. Das Verschleiß- und Dichtungs-Element liegt bei den Varianten (A bis D) auf den ebenen Flächen der entsprechenden Grund-Elemente, die an den jeweiligen Auslaßprofilen bzw. Einlaßprofilen ebenflächig angepaßt sind auf und ist mit diesen mittels Befestigungselemente verbunden. Das Verschleiß- und Dichtungs-Element hat eine dem Rohrquerschnitt angepaßte, gemäß Vorgabe des Winkels ($\alpha$) durchdrungene Öffnung. Ansonsten besteht das Verschleiß- und Dichtungs-Element aus einem abriebfesten, jedoch letztendlich weicherem Kunststoffmaterial als das Material der Unterseite des Schieber-Elementes, daß nach Erreichen eines maximalen **A**briebmaßes **AM** gemäß folgender Funktion auszutauschen ist:

$$AM \cong 0 \cong VDED\text{-}HB$$

hierbei bedeuten:

> **AM** = **A**brieb**M**aß **[27]**
> **HB** = **H**öhe-**B**ördelkante **[43]**
> **VDED** = **V**erschleiß- und **D**ichtungs-**E**lement-**D**icke **[33]**

Konstruktionsbedingt liegt der unterste Arretierpunkt des Verschleiß- und Dichtungs-Elementes im Eckpunkt der Ecknut aller Grund-Elemente der Varianten (A-D), so daß bei geschlossener Stellung des Schieber-Elementes bis zur unteren Fläche der Ecknut ein **S**ediment-**S**icherungs-**M**aß **SSM** bis zur Schabkante verbleibt. Schieber-Elemente erfüllen in allen Varianten (A-D) ihre Dichtfunktion dadurch, daß ihre ebenflächige Unterseite, zumindest mittels der **R**esultierenden-**G**ewichts-**K**omponente **RGK**, in allen Verschlußstellungen auf die ebenfalls ebenflächige Umgrenzungfläche des Verschleiß- und Dichtungs-Elementes aufliegt und angepresst wird, so daß insbesondere bei den Varianten (A; B) die nachfolgenden Gleichungen erfüllt sein müssen:

$$F_{ges} = RGK = m * g * \cos(\alpha) \leq A * \gamma * g * H(N)$$

hierbei bedeutet:

**RGK** = **R**esultierende-**G**ewichts-**K**omponente **[45] (N)**

**M** = **M**asse des Schieber-Elementes **(kg)**

**(α)** = Winkel - Neigung der Umgrenzungsfläche **[33] (°)**

**A** = Fläche - Auslaß- **[3]** bzw. Einlaßprofil **[10] (m²)**

$\gamma$ = spezifisches Gewicht des Mediums **(m)**

**g** = Erdbeschleunigung **(m/sec²)**

**H** = mittlere Druckhöhe aus Wasserdruck **(m)**

In den geschlossenen Varianten (C; D), kann insbesondere durch die anstehende Druckhöhe innerhalb des geschlossenen Grund-Elementes der **M**edien-**D**ruck **MD** zusätzlich auf das Schieber-Element einwirken, so daß hierbei die nachfolgende Gleichung gilt:

$$F_{ges} = RGK + P_{med} * A = m * g * \cos(\alpha) + P\,med * A(N)$$

hierbei bedeutet:

$$P\,med = \text{Medien-Druck MD (m)}$$

Entsprechend der verschiedenen Nutzungsarten des Schieber-Elementes in den Varianten (A-D) werden demzufolge äußerlich ähnliche Konstruktionsformen in zumindest oberflächig korrosionsfester Ausführung als Schwergewichts-Konstruktion bzw. als Biegesteif-Konstruktion aufgezeigt. Die Schwergewichts-Konstruktion könnte insbesondere bei der Variante (A) aus einer massiven Edelstahlplatte gefräst werden, wobei die funktionalen, erfindungsgemäß notwendigen Komponenten der angeformten Bördelkanten, ebenflächigen Unterseite, vorderseitigen Schabkante sowie den varianten Möglichkeiten der Fixierung des eigentlichen Verschub-Elementes angeformt sein müssen. Da sicherlich die vorgenannte Konstruktionsvariante aus Kostengründen nur bedingt einsetzbar ist, wird erfindungsgemäß die nachfolgende alternative Schwergewichts-Konstruktion in Vakuumtechnologie aufgezeigt. Hierbei wird eine **S**chwergewichts-**S**tahl-**P**latte **SSP** mit ebenflächiger Unterseite komplett mit entsprechend ausgeformten Blechelementen umgeben, die an ihren Verbindungsstellen luftdicht verschweißt werden, so daß letztendlich ein Schieber-Element inklusive der notwendigen Bördelkanten zur beabsichtigten Zwangsführung entsteht. Durch die Aktivierung eines Vakuums im Schieber-Element mittels angeformten Vakuum-Ventil, legt sich erfindungsgemäß die äußere Edelstahl-Blechumhüllung und insbesondere das Bodenblech an die ebenflächige **S**chwergewichts-**S**tahl-**P**latte **SSP** Unterseite an, was wiederum in allen Verschlußstellungen des Schieber-Elementes dessen spezielle Dichtung zum Verschleiß- und Dichtungs-Element sicherstellt. Die Biegesteif-Konstruktion besteht äußerlich ebenfalls aus der Edelstahl-Blechumhüllung, wobei jedoch das Bodenblech an der ebenflächigen Unterseite einer **D**ünneren-**S**tahl-**P**latte **DSP** unter Vakuum anliegt, auf die wiederum Konstruktions-Träger unter Verbundwirkung angeschweißt sind, damit eine Verbundtragplatte entsteht, die die Lastkomponente des anstehenden Mediums möglichst verformungsarm auf die Umgrenzungsfläche abträgt. Das Verschub-Element wird zur Aussteuerung des Schieber-Elementes mittels mechanischer, hydraulischer bzw. pneumatischer Komponenten benötigt, wobei insbesondere bei den möglichen größeren Konstruktionshöhen des Schieber-Elementes der Varianten (A; B) die Anordnung eines Zylinderschaftes bei der hydraulischen bzw. pneumatischen Komponente innerhalb des Schieber-Elementes denkbar ist, und damit zwangsweise der gelenkige Schubstangenkopf der zugehörigen Schubstange an der Befestigungskonsole des Grund-Elementes erfolgt. Zur Aussteuerung des Schieber-Elementes insbesondere bei größeren Querschnittsbreiten der Varianten (A; B) kann das Verschub-Element außer der vorgenannten mittigen Anordnung auch aus einer außermittigen 2-fach Anordnung verstanden werden. Bei Umkehrung der vorgenannten Ansteuerungskriterien, die sinnvoller Weise für alle Varianten (A-D) gelten können, ist demzufolge auch erfindungsgemäß der gelenkige Schubstangenkopf bzw. sind die Schubstangenköpfe bei außermittiger Anordnung direkt am Befestigungspunkt des Schieber-Elementes und der jeweils rückwärtige Zylinderschaft an der Befestigungskonsole des Grund-Elementes zu befestigen.

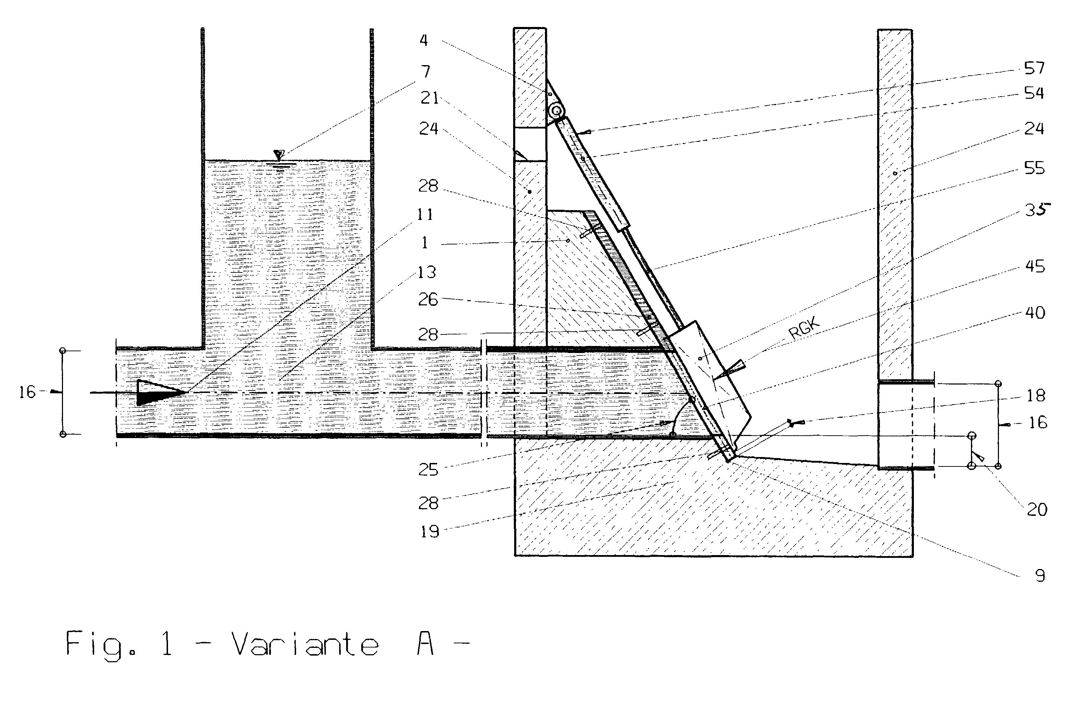

**Fig. 1** zeigt die **Variante A** als Systemschnitt, bei der das Schieber-Element **[35]** innerhalb des Grund-Elementes **[1]** in Stahlbetonbauweise einschließlich der angeformten Sohle **[19]** sowie der umlaufenden Wände **[24]** integriert ist. Durch die ergänzende Darstellung eines Kanalteilstückes **[13]** soll verdeutlicht werden, daß bei der Variante A das Schieber-Element **[35]** in Schließstellung nur die Aktivierung bis zu einer maximalen wasserstandsabhängigen Druckhöhe **[7]** in Abhängigkeit der **R**esultierenden-**G**ewichts-**K**omponente **RGK [45]** des Schieber-Elementes **[35]** zulassen kann. Weiterhin ist das unter dem Winkel (α) **[25]** geneigte Auslaßprofil **[3]** und der damit fixierten ebenflächigen Umgrenzungsfläche **[22]** erkennbar, auf der flächenbündig das Verschleiß- und Dichtungs-Element **[26]** aufliegt, das wiederum mittels Ankerschrauben **[28]** im Beton des Grund-Elementes **[1]** arretiert ist. Verdeutlicht wird ebenfalls, daß bei Vorgabe eines Sohlprunges **[20]** zum Auslaßprofil **[3]** unterhalb der am Schieber-Element **[35]** angeformten Schabkante **[46]** ein notwendiges **S**ediment-**S**icherungs-**M**aß **SSM [18]** vorhanden ist, damit Versperrungen durch anfallende Sedimente bei Ansteuern der Verschlußstellung mittels eines Verschub-Elementes **[54]** über die Schubstange **[55]**, verhindert werden kann.

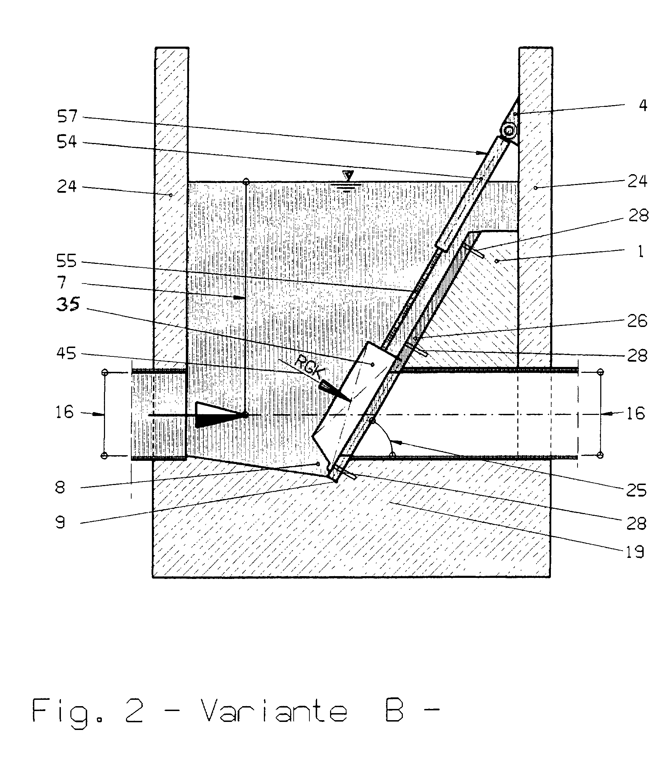

**Fig. 2** zeigt die **Variante B** als Systemschnitt, bei der das Schieber-Element **[35]** innerhalb des Grund-Elementes **[1]** in Stahlbetonbauweise einschließlich der angeformten Sohle **[19]** sowie der umlaufenden Wände **[24]** integriert ist. Bei der Variante B wird ersichtlich, daß das Schieber-Element **[35]** in Schließstellung zusätzlich zur **R**esultierenden-**G**ewichts-**K**omponente **RGK [45]** noch mit der angezeigten wasserstandsabhängigen Druckhöhe **[7]** beaufschlagt wird, wodurch erfindungsgemäß auch eine bautechnisch leichtere Biegesteif-Konstruktion des Schieber-Elementes **[35]** zur Anwendung kommen kann. In Anlehnung an Variante A ist auch hier die Aussteuerung des Schieber-Elementes **[35]** über ein externes, an der Befestigungskonsole **[4]** des Grund-Elementes **[1]** fixiertes Verschub-Element **[54]** als hydraulische bzw. pneumatische Komponente verdeutlicht. Erkennbar ist weiterhin, daß auch bei sohlgleicher Anbindung der Rohrquerschnitte **[16]** die Sedimentationsproblematik im Bereich der Ecknut **[8]** insbesondere durch die fließtechnische Anpassung des unter einem Winkel (α) **[25]** geneigten Verschleiß- und Dichtungs-Elementes **[26]** im wesentlichen entschärft werden kann.

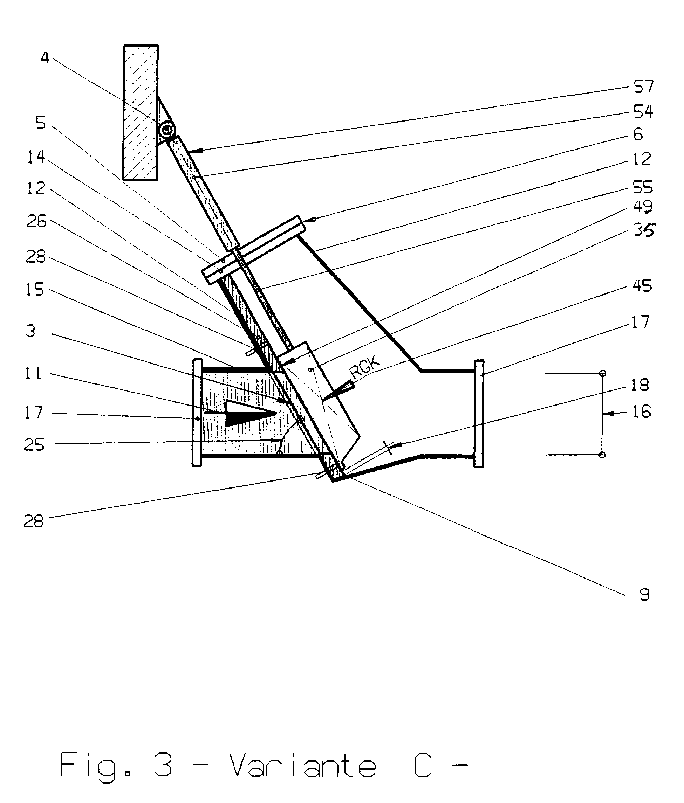

**Fig. 3** zeigt die **Variante C** als Systemschnitt, bei der das Grund-Element **[1]** aus einem geschlossenen Gehäuse **[12]** mit einem oberseitig angeformten Rechteckflansch **[14]** zur Aufnahme des demontierbaren Deckels **[5]** mit zwischenliegender Dichtung **[6]** besteht. Weiterhin ist erkennbar, daß das Verschleiß- und Dichtungs-Element **[26]** mit seiner dem Auslaßprofil **[3]** entsprechenden durchdrungenen Öffnung **[30]**, unter einem Winkel (α) **[25]** geneigt, flächig auf der Umrandungsfläche **[22]** des Auslaßprofiles **[3]** mittels Ankerschrauben **[28]** demontierbar fixiert ist. Zur Montage in Rohrsysteme sind die außenseitigen Rohrverbindungsstücke **[17]** an dem jeweiligen Auslaßprofil **[3]** bzw. Einlaßprofil **[10]** angepaßt. Die mögliche Aussteuerung des Schieber-Elementes **[35]** durch das dargestellte Verschub-Element **[54]** mit zugehörigem Zylinderschaft **[57]** und ausgefahrener Schubstange **[55]** wird verdeutlicht. Auf eine Darstellung von Details für die notwendige dichte Führung der Schubstange **[55]** durch den Deckel **[5]** wurde verzichtet. Durch die angezeigte Fließrichtung **[11]** wird die Wirkungsweise des anstehenden **M**edien-**D**ruckes **MD** auf die Unterseite **[49]** des Schieber-Elementes **[35]** bei massiver Konstruktionsform ersichtlich.

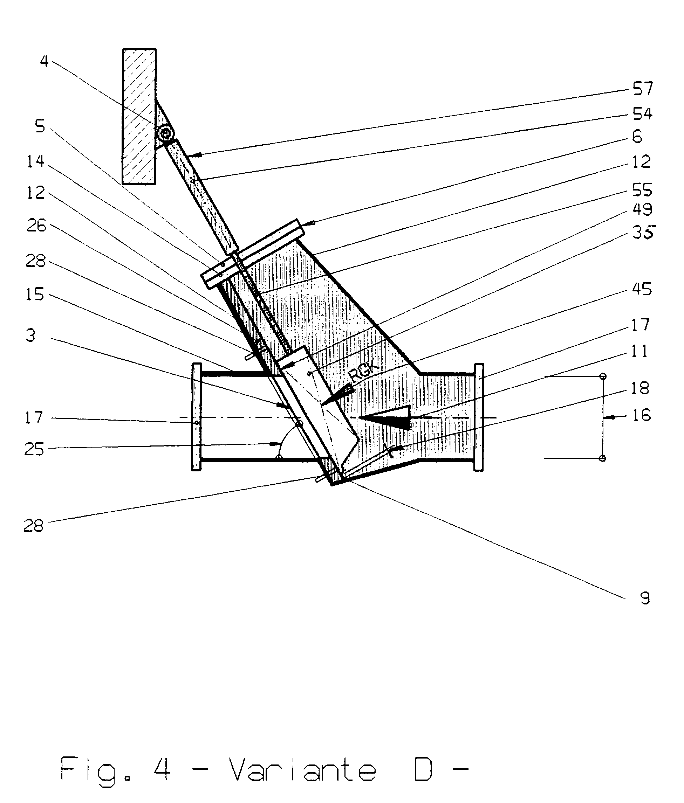

**Fig. 4** zeigt die **Variante D** als Systemschnitt, bei der durch Spiegelung der Variante C und damit veränderter Anströmung durch die Fließrichtung **[11]** angezeigt, der anstehende Medien-Druck zusätzlich zur **R**esultierenden-**G**ewichts-**K**omponente **RGK [45]** auf das Schieber--Element **[35]** wirkt.

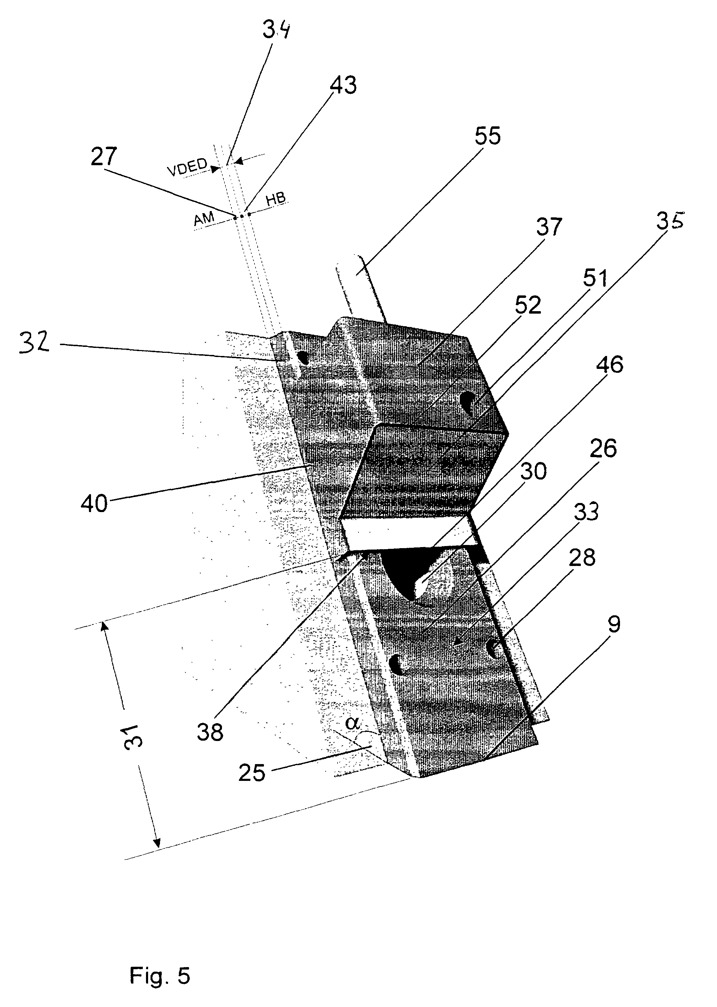

**Fig. 5** zeigt eine isometrische Darstellung als 3D-Zeichnung, bei der visualisiert wird, daß das Schieber-Element **[35]** in vakuumisierter Schwergewichts-Konstruktion mit seiner Bodenblech-Unterseite **[38]** auf der Umgrenzungsfläche **[33]** des Verschleiß- und Dichtungs-Element **[26]** bei allen Verschlußstellungen aufliegt und unter Verschiebungsarbeit des Verschub-Elementes **[54]** mit dargestellter Schubstange **[55]** einen Verschleiß und damit eine Reduzierung der Verschleiß- und **D**ichtungs-**E**lement-**D**icke **VDED [33]** bis zu einem maximalen **A**brieb**m**aß **AM [27]** verursachen kann. Erkennbar ist die Blechumhüllung **[37]** mit der integrierten Bördelkante **[40]** zur Zwangsführung des Schieber-Elementes **[35]** über den variablen Bereich des Schubmaßes **[31]**. Die Blechumhüllung **[37]** besteht aus einzelnen Blechelementen **[36]**, die an den Verbindungsstellen **[52]** u.a. mit dem Stimblech **[48]**, sowie dem Bodenblech **[39]** und dem nicht gesondert dargestellten Vakuum-Ventil **[50]** innerhalb der Vakuum-Ventil-Ausnehmung **[51]** luftdicht verschweißt ist.

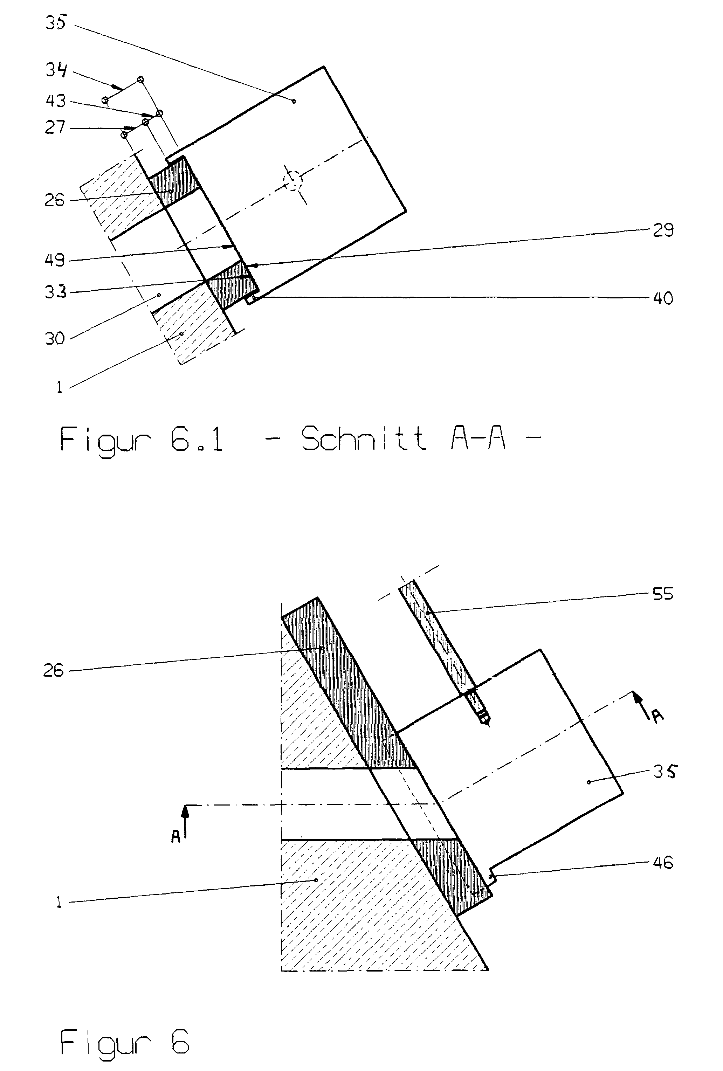

**Fig. 6** zeigt eine Schnitt **D**arstellung des Schieber-Elementes **[35]** in Anlehnung an **Fig. 5** in einer massiven Schwergewichts-Konstruktion einschließlich der angeformten Bördelkanten **[40]**, mit ergänzender Darstellung des Verschleiß-und Dichtungs-Elementes **[26]**, Grund-Elementes **[1]** bzw. Verschub-Elementes **[54]**. Die bei kleineren Schieber-Elementen **[35]** sinnvolle Fixierung des Verschub-Elementes **[54]** mit Darstellung der mittig angeordneten Schubstange **[55]** wird verdeutlicht. Die Unterseite **[49]** des Schieber-Elementes Schieber-Elementes **[35]** sollte zur Verbesserung der Gleitwirkung ebenflächig und möglichst glatt ausgebildet sein. Vollständigkeitshalber sind ergänzende Bezugszeichen gemäß Aufstellung, wie z.B. der Dichtungsraum **[29]** der als Berührungsbereich der ebenflächigen Unterseite **[49]** mit der Umgrenzungsfläche **[33]** aufgefaßt werden kann, eingetragen.

**Fig. 6.1** zeigt einen **Schnitt "A-A"** des Schieber-Elementes **[35]** aus **Fig. 6** in dem ergänzend der Zusammenhang des Formelansatzes in der Beschreibung zeichnerisch dargestellt ist.

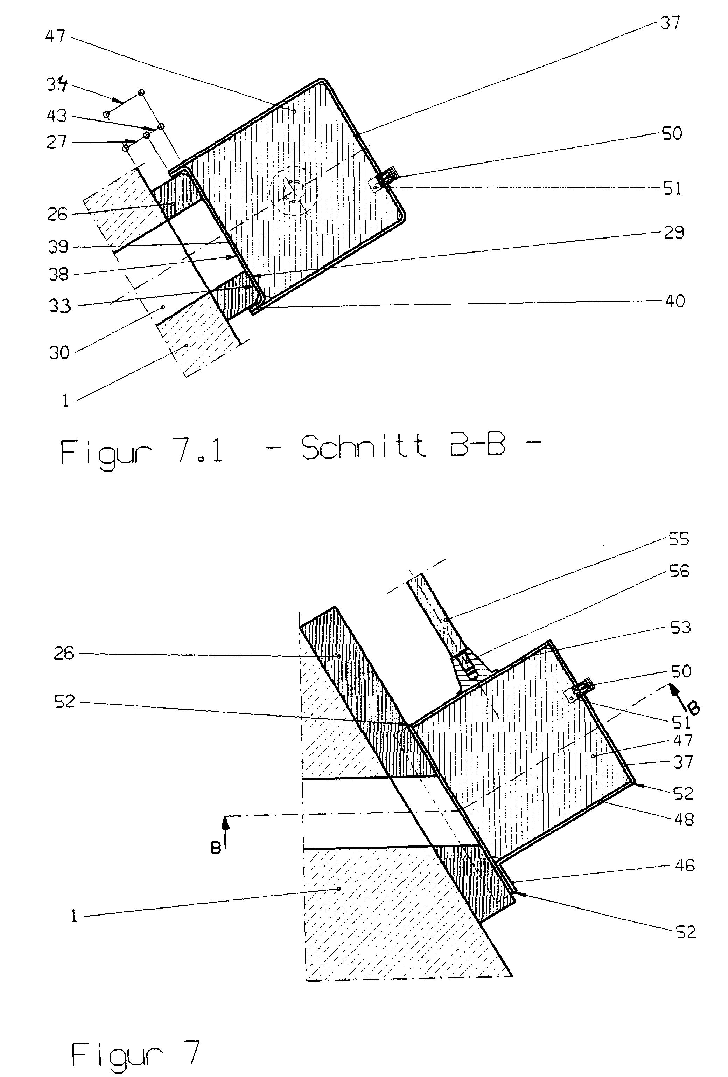

**Fig. 7** zeigt eine Schnittdarstellung des Schieber-Elementes **[35]** in Anlehnung an **Fig. 5** in einer alternativen Konstruktionstechnik bei dem eine Schwergewichts-Stahl-Platte **[47]** allseitig mit ausgeformten Blechelementen **[36]**, die an ihren Verbindungsstellen **[52]** luftdicht verschweißt sind, umgeben ist. Durch Vakuumisierung des Bereiches zwischen der Blechumhüllung **[37]** und der Schwergewichts-Stahl-Platte **[47]** mittels des dargestellen in der Vakuum-Ventil-Ausnehmung **[51]** angeordneten Vakuum-Ventils **[50]** wird erreicht, daß das Bodenblech **[39]** sich flächig an die Unterseite **[49]** Schwergewichts-Stahl-Platte **[47]** anlegt. Weiterhin ist die Ausbildung der Bördelkante **[40]** ersichtlich, die zur Zwangsführung des Schieber-Elementes **[34]** notwendig ist. Verdeutlicht wird weiterhin der Zusammenhang zwischen der Höhe der Bördelkante **[40]** und dem verbleibenden Abriebmaß **[27]** des Verschleiß- und Dichtungs-Elementes **[26]** entsprechend des Formelansatzes auf Seite 7. Zur Komplettierung der Funktionsbedingungen sind die Einzelelemente bestehend aus dem Grund-Element **[1]** sowie die Anordnung des Verschub-Elementes **[54]** mit Schubstange **[55]** und Schubstangenkopf **[56]** sowie die Fixierung im Bereich des Verschub-Element-Bleches **[53]** dargestellt. Die vorzugsweise Ausgestaltung der Schabkante **[46]** in Verbindung mit dem Stimblech **[48]** bzw. der Bördelkante **[40]** und die zugehörigen Verschweißungen der Verbindungsstellen **[52]** werden verdeutlicht.

**Fig. 7.1** zeigt einen **Schnitt "B - B"** des Schieber-Elementes **[35]** aus **Fig. 7** in dem ergänzend der Zusammenhang des Formelansatzes in der Beschreibung Seite 7 Zeile 41 zeichnerisch dargestellt ist.

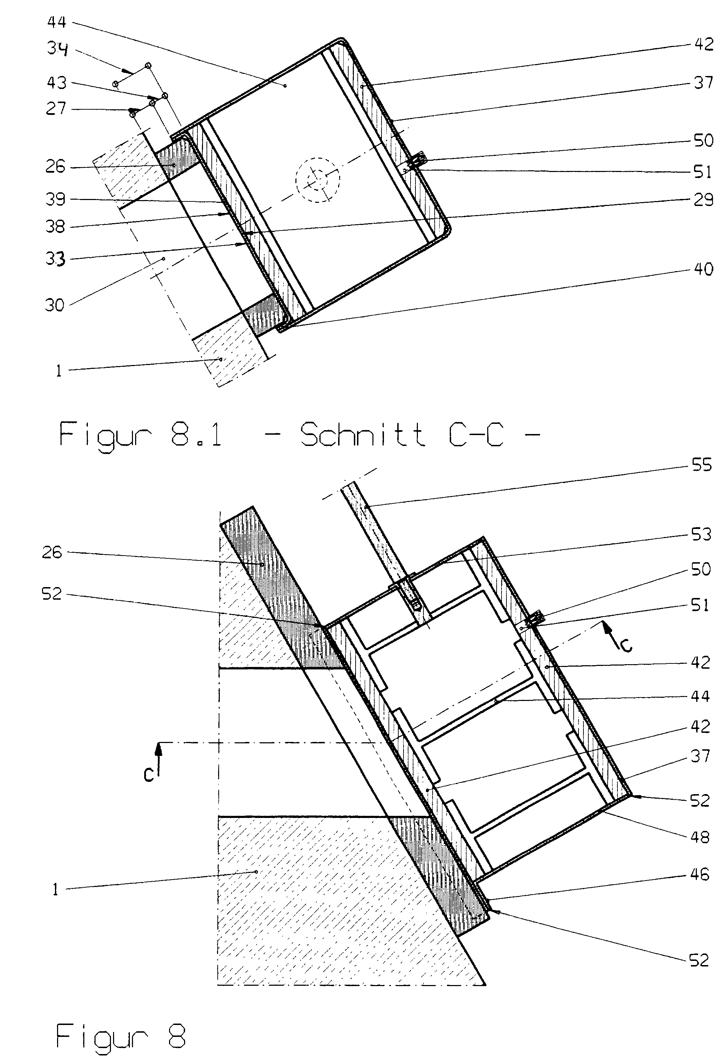

**Fig. 8** zeigt eine Schnittdarstellung des Schieber-Elementes **[35]** in Anlehnung an **Fig. 5** in eineralternativen Biegesteif-Konstruktionstechnik bei dem zwischen einer oberen und unteren Dünneren-Stahl-Platte **[42]** ein Konstruktions-Träger **[44]** in Form eines T-Profiles angeordnet ist, die wiederum außenseitig mit einer aus Blechelementen **[36]** bestehenden Blechumhüllung **[37]** in Anlehnung an die Konstruktionsmerkmale gemäß **Fig. 7** umgeben ist. Die äußeren Blechkonstruktionsmerkmale sowie die funktionsbedingten Zusammenhänge der Einzelelemente entsprechen ansonsten weiterhin der **Fig.7**.

**Fig. 8.1** zeigt einen **Schnitt "C - C"** des Schieber-Elementes **[35]** aus **Fig. 8** in dem ergänzend der Zusammenhang des Formelansatzes in der Beschreibung zeichnerisch dargestellt ist.

**Aufstellung der Bezugszeichen**

1. **Grund-Element**
2. Ablaufkanal (Variante A)
3. Auslaßprofil (Variante A;C)
4. Befestigungskonsole
5. Deckel
6. Dichtung
7. Druckhöhe
8. Ecknut
9. Eckpunkt
10. Einlaßprofil (Variante B;D)
11. Fließrichtung
12. Gehäuse
13. Kanalteilstück
14. Rechteckflansch
15. Rohrformstück
16. Rohrquerschnitt
17. Rohrverbindungsstück
18. **S**ediment-**S**icherungs-**M**aß **SSM**
19. Sohle
20. Sohlsprung
21. Überlauf
22. Umrandungsfläche
23. Verschraubungen
24. Wände
25. Winkel ($\alpha$)
26. **Verschleiß-und Dichtungs-Element**
27. **A**brieb**m**aß **AM**
28. Ankerschrauben
29. Dichtungsraum
30. Öffnung
31. Schubmaß
32. Seitenflächen
33. Umgrenzungsfläche
34. **V**erschleiß- und **D**ichtungs-**E**lement-**D**icke **VDED**
35. **Schieber-Element**
36. Blechelement
37. Blechumhüllung
38. Bodenblech-Unterseite
39. Bodenblech
40. Bördelkante

41. DSP-Unterseite
42. **D**ünnere-**S**tahl-**P**latte **DSP**
43. **H**öhe **B**ördelkante **HB**
44. Konstruktions-Träger
45. **R**esultierende-**G**ewichts-**K**omponente **RGK**
46. Schabkante
47. **S**chwer-**G**ewichts-**S**tahlplatte **SSP**
48. Stimblech
49. Unterseite (bei massiven Frästeilen)
50. Vakuum-Ventil
51. Vakuum-Ventil-Ausnehmung
52. Verbindungsstellen
53. Verschub-Element-Blech
54. **Versehub-Element**
55. Schubstange
56. Schubstangenkopf
57. Zylinderschaft

**Patentansprüche**

1. Schiebersystem verschiebbar geführt, zur kontinuierlichen Aussteuerung und Reinigung von Kanalisationsanlagen durch Erzeugung von Schwallwellen und konstruktionsbedingten weiteren Nutzung als Steuer- und Verschlußorgan für sonstige flüssige und gasförmige Medien, wobei das Schiebersystem aus einem Grund-Element **[1]**, einem Verschleiß- und Dichtungs-Element **[26]** einem Schieber-Element **[35]** und einem Verschub-Element **[54]** besteht, wobei das Schieber-Element **[35]** mittels des Verschub-Elementes **[54]** mit seiner ebenflächigen, korrosionsfesten Unterseite **[49]** bzw. Bodenblech-Unterseite **[38]** unter einem Winkel ($\alpha$) **[25]** $\geq 0°$ und $\leq 90°$ zur Horizontalen des Grund-Elementes **[1]** auf der ebenflächigen Umgrenzungsfläche **[33]** des plattenförmigen, planparallelen Verschleiß- und Dichtungs-Elementes **[26]** aus abriebfestem Kunststoff bestehend, bei allen Verschlussstellungen und Fließrichtungen **[11]** zumindest infolge der **R**esultierenden-**G**ewichts-**K**omponente **RGK [45]** des Schieber-Elementes **[35]** und je nach entsprechendem Medien-Druck mit zugehöriger Druckhöhe **[7]** dichtungsfunktionell aufliegt und angepresst wird,und mittels dem aus mechanischer, hydraulischen oder pneumatischen Komponenten bestehenden Verschub-Elementes **[54]** verschoben werden kann, wobei die notwendige Zwangsführung des Schieber-Elementes **[35]** dadurch herbeigeführt wird, daß die seitlich angeformten Bördelkanten **[40]** des Schieber-Elementes **[35]** beim Verschub immer auf den beiden Seitenflächen **[32]** des Verschleiß- und Dichtungs-Elementes **[26]** geführt aufliegen und das Verschleiß-und Dichtungs-Element **[26]** unter Verwendung von Verschraubungen **[23]** mit dem Grund-Element **[1]** demontierbar verbunden ist.

2. Schiebersystem nach Anspruch 1, **dadurch gekennzeichnet, daß** das Verschleiß- und Dichtungs-Element **[26]** aus dichtungstechnischen Gründen wiederum mit seiner ebenflächigen Unterseite **[49]** auf der ebenflächigen Umrandungsfläche **[22]** der jeweiligen Ausführungsformen des Grund-Elementes **[1]** aufliegt.

3. Schiebersystem nach Anspruch 1 und 2, **dadurch gekennzeichnet, daß** durch Absenkung des Schieber-Elementes **[35]** mit einem entsprechend bemessenen Schubmaß **[31]** unterhalb der Sohle **[19]** hierdurch eine oberschlägige Weiterleitung von Schwimmstoffen erfolgt.

4. Schiebersystem nach einem der Ansprüche 1 bis 3, **dadurch gekennzeichnet, daß** das Verschleiß- und Dichtungs-Element **[26]** eine dem Rohrquerschnitt **[16]** der entsprechenden Variante (A bis D) angepaßte, gemäß Vorgabe des Winkels ($\alpha$) **[25]** durchdrungene Öffnung **[30]** besitzt, wobei entsprechend der auszusteuernden Steuerungsvariante das Schieber-Element **[35]** nicht nur unterschlächtig sondern auch oberschlägig überströmt werden kann, wenn unterhalb der Öffnung **[30]** ein entsprechendes Schubmaß **[31]** bis zum Eckpunkt **[9]** vorhanden ist.

5. Schiebersystem nach einem der Ansprüche 1 bis 4, **dadurch gekennzeichnet, daß** das Schieber-Element **[35]** entsprechend der anstehenden Mediendrücke bzw. Druckhöhen **[7]** in verschiedenen Konstruktionsformen als Schwergewichts-Konstruktion bzw. Biegesteif-Konstruktion ausgebildet werden kann, bei dem insbesondere die Schwergewichts-Konstruktion aus einer massiven Edelstahlplatte gefräst bzw. geformt wird, bei der die angeformten seitlichen Bördelkanten **[40]** die ebenflächige Unterseite **[49]** begrenzt und im unteren Bereich die vorderseitige Schabkante **[46]** sowie den varianten Möglichkeiten der Fixierung des eigentlichen Verschub-Elementes **[54]** angeformt sein müssen.

**6.** Schiebersystem nach Anspruch 1 bis 5, **dadurch gekennzeichnet, daß** das Schieber-Element **[35]** im Inneren einer korrosionsgefährdeten Schwer-Gewichts-Stahlplatte **[47]** besteht, die oberflächig komplett mit ausgeformten korrosionsfesten, an ihren Verbindungsstellen **[52]** luftdicht verschweißten Blechelementen **[36]** umgeben ist, und somit eine komplette Edelstahl-Blechumhüllung **[37]** ergibt, die wiederum durch Aktivierung eines Vakuums mittels eingeschweißtem Vakuum-Ventil **[50]** auf die Schwer-Gewichts-Stahlplatte **[47]** gepresst werden, so daß das Schieber-Element **[35]** mit der zwischen den Bördelkanten **[40]** befindlichen Bodenblech-Unterseite **[38]** auf dem Verschleiß- und Dichtungs-Element **[26]** aufliegt und verschoben werden kann.

**7.** Schiebersystem nach Anspruch 1 bis 6, **dadurch gekennzeichnet, daß** das Schieber-Element **[35]** auch als Biegesteif-Konstruktion mit einer äußeren Edelstahl-Blechumhüllung versehen ist, wobei jedoch das Bodenblech **[39]** an der ebenflächigen Unterseite **[49]** einer **D**ünneren-**S**tahl-**P**latte **DSP [42]** unter Vakuum anliegt, auf die wiederum Konstruktions-Träger **[44]** unter Verbundwirkung angeschweißt sind, damit eine Verbundtragplatte entsteht, die die Lastkomponente gemäß der Druckhöhe **[7]** des entsprechenden **M**edien-**D**ruckes **MD** möglichst verformungsarm auf die Umgrenzungsfläche **[33]** des Verschleiß- und Dichtungs-Elementes **[26]** abträgt.

**8.** Schiebersystem nach Anspruch 1 bis 7, **dadurch gekennzeichnet, daß** das Grund-Element **[1]** der Varianten (A; B) mit angeformter Sohle **[19]** sowie der umlaufenden Wände **[24]**, vorwiegend in Betonbauweise erstellt, ein entsprechend ausgebildetes Rohrformstück **[15]** besitzt, das zumindest einseitig, bei Variante (A) mit einem Auslaßprofil **[3]** und bei Variante (B) mit einem Einlaßprofil **[10]** unter einem Winkel ($\alpha$) **[25]** geneigt ist.

**9.** Schiebersystem nach Anspruch 1 bis 8, **dadurch gekennzeichnet, daß** das Grund-Element **[1]** der Varianten (C; D) zur Aktivierung von **M**edien-**D**rücken **MD** entsprechend der Druckhöhe **[7]** als geschlossenes Gehäuse **[12]** mit demontierbarem Deckel **[5]** zum möglichen Austausch des Verschleiß-und Dichtungs-Elementes **[26]** aus Edelstahl bzw. hochwertigem Kunststoff gefertigt ist, bei dem zulaufseitig bei Variante (C) bzw. ablaufseitig bei Variante (D) das jeweilige Verschleiß- und Dichtungs-Element **[26]** auf der unter einem Winkel (a) **[25]** geneigten, ebenen Umrandungsfläche **[22]** innerhalb des Gehäuses **[12]** aufliegt und das Schieber-Element **[35]** durch ein geeignetes im Regelfall von außen aktivierbares Verschub-Element **[54]** verschoben werden kann.

**10.** Schiebersystem nach einem der Ansprüche 1 bis 9, **dadurch gekennzeichnet, daß** das Verschub-Element **[54]** bei möglichen größeren Konstruktionshöhen des Schieber-Elementes **[35]** die Anordnung eines Zylinderschaftes **[57]** für eine hydraulische bzw. pneumatische Version auch innerhalb des Schieber-Elementes **[35]** eingebaut wird, so daß die Befestigung des Schubstangenkopfes **[56]** der zugehörigen Schubstange **[55]** an der Befestigungskonsole **[4]** des Grundelementes **[1]** erfolgt.

**11.** Schiebersystem nach einem der Ansprüche 1 bis 10, **dadurch gekennzeichnet, daß** mit größeren Abmessungen versehene Schieber-Elemente **[35]** auch mittels zweier im Regelfall seitlich angeordneter, wechselseitig am Schieber-Element **[35]** bzw. Grund-Element **[1]** befestigten Verschub-Elementen **[54]**, zwangsgeführt ausgesteuert werden.

**Claims**

**1.** Sliding system, of displaceable design, for the continuous control and cleaning of sewer systems through generation of surge waves, and for the further utilisation as control and locking element for other liquid and gaseous media in line with its design, whereby the sliding system consists of a basic element **[1]**, a wearing and sealing element **[26]**, a sliding element **[35]** and a shifting element **[54]**, whereby the sliding element **[35]** with its plane and anti-corrosive bottom face **[49]** and/or bottom sheet underside **[38]** is supported and pressed onto the plane boundary space **[33]** of the plate-shaped, plane-parallel wearing and sealing element **[26]** made of non-abrasive plastic material, by means of the shifting element **[54]** and at an angle ($\alpha$) **[25]** $\geq 0°$ and $\leq 90°$ in relation to the basic element's horizontal line **[1]**, in all locking positions and directions of flow, **[11]** at least owing to the **r**esultant **w**eight **c**omponent **RWC [45]** of the sliding element **[35]** and depending on the media pressure involved with its related hydrostatic pressure **[7]**, and it can be displaced using the shifting element **[54]** consisting of mechanical, hydraulic or pneumatic components, whereby the required sliding element's **[35]** positive guide is achieved by the laterally fitted sliding element **[35]** flanged edges **[40]** always resting, during shifting, on both lateral faces **[32]** of the wearing and sealing element **[26]** and the wearing and sealing element **[26]** being connected to the basic element **[1]** using removable screw fixings **[23]**.

2. Sliding system pursuant to Claim 1, an important characteristic feature being that for sealing reasons the wearing and sealing element **[26]** with its plane bottom face **[49]** rests again on the plane bordering space **[22]** of the respective basic element forms of construction **[1]**.

3. Sliding system pursuant to Claims 1 and 2, an important characteristic feature being that an overshot transfer of floating substances occurs through lowering of the sliding element **[35]** with corresponding shear modulus **[31]**, below the invert **[19]**.

4. Sliding system pursuant to one of Claims 1 through 3, an important characteristic feature being that the wearing and sealing element **[26]** is provided with an opening **[30]** which corresponds to the pipe cross-section **[16]** of the respective alternative (A through D) based on angle (α) **[25]**, whereby the sliding element **[35]** facilitates both over- and undershot submergence depending on the control alternative involved, if a corresponding shear modulus **[31]** exists up to the comer point **[9]**, below the opening **[30]**.

5. Sliding system pursuant to one of Claims 1 through 4, an important characteristic feature being that the sliding element **[35]** can be designed in various forms as gravity-type and/or bending resistant construction, depending on the media pressures and/or hydrostatic pressures **[7]** involved, whereby particularly the gravity-type construction is milled and/or formed from a solid high-grade steel plate, in which case the fitted lateral flanged edges **[40]** must delimit the plane bottom face **[49]** and be fitted to suit both the front scraping edge **[46]** in its lower section and the alternative fixing options of the shifting element as such **[54]**.

6. Sliding system pursuant to Claims 1 through 5, an important characteristic feature being that the sliding element **[35]** exists inside a heavy-weight steel plate **[47]**, which is sensitive to corrosion and on its external surface fully enclosed by form-shaped, corrosion-proof sheet metal elements **[36]** with air-tight welds at the respective joints **[52]**, thereby forming a complete stainless steel wrapping **[37]**, and these sheet metal elements **[36]**, in turn, are pressed onto the heavy-weight steel plate **[47]** through activation of a vacuum using a weld-on vacuum valve **[50]**, so that the sliding element **[35]** is supported, and can be shifted, on the wearing and sealing element **[26]**, with the bottom sheet underside **[38]** located between the flanged edges **[40]**.

7. Sliding system pursuant to Claims 1 through 6, an important characteristic feature being that the sliding element **[35]** in its bending resistant construction is also provided with a stainless steel wrapping, whereby, however, the bottom sheet **[39]** at the plane bottom face **[49]** aligns under vacuum with a **t**hinner **s**teel **p**late **TSP [42]** with structural straps **[44]** welded onto it under composite action, to form a composite carrier plate for the load component to be transferred, with adequate resistance to deformation, to the surrounding surface **[33]** of the wearing and sealing element **[26]**, in line with the hydrostatic pressure **[7]** of the corresponding **m**edia **p**ressure **MP**.

8. Sliding system pursuant to Claims 1 through 7, an important characteristic feature being that the basic element **[1]** of alternatives (A; B), with fitted invert **[19]**, surrounding walls **[24]** and mainly in concrete construction, is provided with a correspondingly designed pipe fitting **[15]** which, at least on one side, is inclined under an angle (α) **[25]**, in the case of alternative (A) with an outlet profile **[3]** and of alternative (B) with an inlet profile **[10]**.

9. Sliding system pursuant to Claims 1 through 8, an important characteristic feature being that for activation of **m**edia **p**ressures **MP** in line with the hydrostatic pressure **[7]** the basic element **[1]** of alternatives (C; D) is designed in the form of a closed high grade steel and/or high quality plastic casing **[12]** with removable lid **[5]** to provide for the wearing and sealing element **[26]** to be replaced in case of need, whereby the respective wearing and sealing element **[26]** is supported on the plane bordering space **[22]** - inclined under an angle (α) **[25]** - inside the casing **[12]**, in the case of alternative (C) on the inflow side and/or the outflow side in alternative (D), and that the sliding element **[35]** can be displaced using a suitable shifting element **[54]**, normally operated from the outside.

10. Sliding system pursuant to one of Claims 1 through 9, an important characteristic feature being that in the event of possibly higher sliding element **[35]** design heights the shifting element **[54]** is also installed inside the sliding element **[35]** through provision of a cylinder shaft **[57]** to provide for a hydraulic and/or pneumatic version, so that the slide bar head **[56]** of the pertaining slide bar **[55]** is fixed to the fastening console **[4]** of the basic element **[1]**.

11. Sliding system pursuant to one of Claims 1 through 10, an important characteristic feature being that sliding elements **[35]** of larger dimensions can also be operated based on the positive guide system, by means of two shifting

## EP 0 918 113 B1

elements **[54]** normally arranged laterally on either on the sliding element **[35]** or the basic element **[1]**.

**Revendications**

1. Système coulissant guidé de manière réglable, conçu pour le réglage et le nettoyage continu de systèmes de canalisation par production d'ondes de choc et, suite à sa construction, pour l'utilisation ultérieure en tant qu'élément de commande et de verrouillage pour la distribution d'autres éléments liquides et gazeuses, le système coulissant étant composé par un élément de base **[1]**, un élément d'usure et d'étanchéité **[26]**, un élément coulissant **[35]** et un élément de déplacement **[54]**, et, pour des raisons d'étanchéité et par l'intermédiaire de l'élément de déplacement **[54]**, l'élément coulissant **[35]** sera pressé avec sa face inférieure plane et résistante à la corrosion **[49]** ainsi qu'avec sa face inférieure de la tôle de fond **[38]** à un angle ($\alpha$) >= 0° et <= 90° par rapport à l'horizontale de l'élément de base **[1]** sur la superficie plane de délimitation **[33]** de l'élément d'usure et d'étanchéité **[26]** à faces planes et parallèles en forme d'une plaque et fabriqué en matières plastiques résistantes à l'abrasion, ceci valant pour toutes les positions de verrouillage et directions d'écoulement **[11]**, du moins suite au **c**omposant **r**ésultant du **p**oids **CRP [45]** de l'élément coulissant **[35]** ainsi qu'à la pression du milieu environnant avec un niveau de pression **[7]** respectif, et il peut être déplacé par l'intermédiaire de l'élément de déplacement **[54]** unissant des composants mécaniques, hydrauliques ou pneumatiques, le guidage forcé de l'élément coulissant **[35]** se faisant tel que, lors du déplacement, les bords rabattus **[40]** disposés latéralement sur l'élément coulissant **[35]** reposent toujours sur les superficies latérales **[32]** de l'élément d'usure et d'étanchéité **[26]** et l'élément d'usure et d'étanchéité est uni avec l'élément de base **[1]** par des raccords **[23]** démontables.

2. Système coulissant selon la revendication 1 dont les caractéristiques sont que, pour des raisons d'étanchéité, l'élément d'usure et d'étanchéité **[26]** repose avec sa face inférieure plane **[49]** sur la superficie d'encadrement plane **[22]** des variantes d'exécution respectives de l'élément de base **[1]**.

3. Système coulissant selon les revendications 1 et 2 dont les caractéristiques sont telles que le rabattement de l'élément coulissant **[35]** avec une mesure de poussée **[31]** dimensionnée conformément aux exigences en dessous du radier **[19]** provoque une transmission des matières flottantes d'en dessus.

4. Système coulissant selon une des revendications 1 à 3 dont les caractéristiques sont telles que l'élément d'usure et d'étanchéité **[26]** dispose d'un orifice **[30]** adapté à la section du tuyaux **[16]** de la variante en question (A à D) selon l'angle de référence ($\alpha$) **[25]**, et, suivant la variante de commande à régler, l'élément coulissant **[35]** ne peut être submergé non seulement d'en dessous mais aussi d'en dessus au cas où il existe une mesure de poussée **[31]** jusqu'au point angulaire **[9]** en dessous de l'orifice.

5. Système coulissant selon une des revendications 1 à 4 dont les caractéristiques sont telles que, selon les différentes pressions environnantes ou niveaux de pression **[7]**, l'élément coulissant **[35]** peut être conçu sous différentes formes de construction, c.à.d. ou en construction massive ou en construction rigide à la flexion, et la construction massive est formée ou taillée à partir d'une planche massive en acier fin avec des bords latéraux rabattus **[40]** déterminant la face inférieure plane **[49]** qui doivent être adaptés dans la section inférieure au bord de raclage **[46]** ainsi qu'aux différentes possibilités de fixation de l'élément de déplacement **[54]** proprement dit.

6. Système coulissant selon les revendications 1 à 5 dont les caractéristiques sont telles que l'élément coulissant **[35]** se situe à l'intérieur d'une plaque en acier à contrepoids **[47]** sensible à la corrosion, laquelle est entièrement revêtue d'éléments de tôle **[36]** résistants à la corrosion et soudés hermétiquement aux points de raccordement respectifs **[52]**, formant ainsi un enveloppe de tôle en acier fin **[37]** et, par activation d'un clapet à vide **[50]** provoquant un vide, les éléments de tôle seront pressés sur la plaque en acier à contrepoids **[47]** de manière que l'élément coulissant **[35]** repose avec la face inférieure de la tôle de fond **[38]** se situant entre les bords rabattus **[40]** sur l'élément d'usure et d'étanchéité **[26]** et peut être déplacé.

7. Système coulissant selon selon les revendication 1 à 6 dont les caractéristiques sont telles que l'élément coulissant **[35]** en construction rigide à la flexion est également doté d'un revêtement extérieur en tôle d'acier fin, mais la tôle de fond **[39]** repose sous vide avec sa face inférieure plane **[49]** sur une **p**laque **m**ince en **a**cier **PMA [42]**, avec des âmes de construction **[44]** qui y ont été soudées par adhérence afin de former une plaque d'appui par adhérence qui transmet la charge selon le niveau de pression **[7]** de la **p**ression **e**nvironnante **PE** avec un minimum de déformation sur la superficie de délimitation **[33]** de l'élément d'usure et d'étanchéité **[26]**.

8.  Système coulissant selon les revendications 1 à 7 dont les caractéristiques sont telles que l'élément de base **[1]** des variantes (A; B) ayant un radier façonné **[19]** ainsi que des parois entourant **[24]** - généralement en construction en béton - dispose d'une pièce appropriée prévue pour des raccordements de tuyaux **[15]** qui est inclinée, du moins unilatéralement, et qui se distingue par un profil de décharge **[3]** pour la variante (A) et un profil d'amenée **[10]** pour la variante (B) à un angle ($\alpha$) **[25]**.

9.  Système coulissant selon les revendications 1 à 8 dont les caractéristiques sont telles que l'élément de base **[1]** des variantes (C; D) est fabriqué en acier fin, respectivement en matières plastiques de qualité supérieure, formant ainsi un boîtier fermé **[12]** avec couvercle démontable **[5]** pour l'activation de pressions environnantes (**PE**) selon le niveau de pression **[7]** pour échanger l'élément d'usure et d'étanchéité **[26]** en cas de besoin et, pour la variante C (amenée) respectivement la variante D (décharge), l'élément d'usure et d'étanchéité **[26]** repose à l'intérieur du boîtier **[12]** sur la superficie d'encadrement plane **[22]** inclinée à un angle ($\alpha$) **[25]** et l'élément coulissant **[35]** peut être déplacé par un élément de déplacement **[54]** qui s'active en général à partir de l'extérieur.

10. Système coulissant selon les revendications 1 à 9 dont les caractéristiques sont telles que lorsqu'il s'agit de dimensions de construction supérieures de l'élément coulissant **[35]** pour une version hydraulique ou pneumatique, l'élément de déplacement **[54]** sera monté à l'intérieur de l'élément coulissant **[35]** par la disposition d'une tige cylindrique **[57]**, afin de fixer la tête **[56]** de la tige de poussée respective **[55]** sur la console de fixation **[4]** de l'élément de base **[1]**.

11. Système coulissant selon une des revendications 1 à 10 dont les caractéristiques sont telles que des éléments coulissants **[35]** de dimension supérieure seront réglés par guidage forcé par l'intermédiaire de deux éléments de déplacement **[54]** fixés en général latéralement sur l'élément coulissant **[35]** respectivement sur l'élément de base **[1]**.

Fig. 1 - Variante A -

EP 0 918 113 B1

Fig. 2 - Variante  B -

Fig. 3 - Variante  C -

Fig. 4 — Variante D —

Fig. 5

Figur 6.1 — Schnitt A-A —

Figur 6

Figur 7.1    - Schnitt B-B -

Figur 7

Figur 8.1 – Schnitt C-C –

Figur 8